# EUROPÄISCHE PATENTSCHRIFT

(11) **EP 2 228 558 B1**
(45) Veröffentlichungstag und Bekanntmachung des Hinweises auf die Patenterteilung: **26.01.2011**
(21) Anmeldenummer: 10001879.5
(22) Anmeldetag: 24.02.2010
(51) Int. Cl.: F16D 65/092, F16D 69/04

(54) **Bremsbelag für Scheibenbremsen**
Brake lining for disc brakes
Garniture de frein pour freins à disques

(30) Priorität: 03.03.2009 DE 102009011121
(43) Veröffentlichungstag der Anmeldung: 15.09.2010
(73) Patentinhaber: TMD Friction Services GmbH, 51381 Leverkusen (DE)
(72) Erfinder: Röhling, Willmut, 53809 Ruppichteroth (DE)
(74) Vertreter: Müller, Eckhard

(56) Entgegenhaltungen:
- DE-A1- 2 404 671
- GB-A- 1 025 881
- JP-A- 60 037 432

## Beschreibung

Die Erfindung betrifft einen Bremsklotz für Scheibenbremsen mit einem Bremsbelagträger und darauf angeordnetem Reibbelag, der wenigstens drei Vertiefungen aufweist, die im Wesentlichen in Längserstreckung des Bremsbelags und parallel zueinander verlaufen.

### Stand der Technik

Es ist bekannt, den auf einem Bremsbelagträger aufgebrachten Reibbelag eines Bremsklotzes mit Vertiefungen zu versehen. Durch diese Vertiefungen soll vermieden werden, dass es zu Oberflächenrissen des Reibbelages kommt.

Es hat sich allerdings gezeigt, dass beim Bremsen eine ungleichmäßige Wärmeeinleitung in den Reibbelag erfolgt. Diese ungleichmäßige Wärmeeinleitung in den Reibbelag hat Temperaturspitzen in den Bremsscheiben zur Folge, was insbesondere bei hoch belasteten Scheibenbremsen schnell zu Scheibenrissen führen kann. Die Reibbeläge und die Bremsscheiben dehnen sich nämlich in ihrem Reibzentrum am stärksten aus, so dass es in diesem Bereich zu einer Druck- und Temperaturerhöhung kommt, die zu den beschriebenen Scheibenrissen führen kann.

Durch die ungleichförmige Temperatur- bzw. Wärmeeinleitung in den Bremsbelag und die daraus resultierenden Bremsscheibenrisse erhöht sich auch der Verschleiß des Bremsbelages deutlich. Wartungs- und Austauscharbeiten am Bremssystem des Kraftfahrzeuges sind daher in relativ kurzen Zeitintervallen durchzuführen.

Bremsbeläge müssen daher eine möglichst hohe Kompressibilität haben, um diese Mängel einzudämmen. Dies führt aber auf der anderen Seite zu einem erheblichen Leistungsverlust beim Bremsvorgang.

Aus der DE 100 41 294 A1 ist eine Bremsbacke für eine Scheibenbremse bekannt, bei der zur Reduzierung von Momentschwingungen beim Bremsvorgang ein orthogonales Nutenraster im Reibbelag vorgesehen ist, wobei die Nuten mit einem Füllmaterial ausgefüllt sind. Dieses Füllmaterial verbindet die durch die Nuten unterteilten Belagabschnitte elastisch untereinander, wodurch beim Bremsvorgang Momentschwingungen reduziert werden sollen.

Die DE 30 15 765 A1 beschreibt einen Bremskörper aus Leichtmetall mit einer harten und verschleißfesten, die Bremsfläche bildenden Schicht, die auf einen Grundkörper aufgebracht ist. In dieser verschleißfesten Schicht sind Nuten vorgesehen, die linienförmig verlaufen und in der Figur 3 dargestellt sind. In dieser Figur ist mit einem Pfeil die Gleitgeschwindigkeitsrichtung angegeben, die folglich im Wesentlichen senkrecht zu der in dieser Figur dargestellten Vertiefungen verläuft. Es ist auch davon auszugehen, dass dieser Bremskörper für linear ablaufende Bremsvorgänge eingesetzt wird.

Aus der DE 24 04 671 A1 ist ein Bremsbelag und ein Belagträger für Scheibenbremsen bekannt. Dieser Bremsbelag umfasst in Umfangsrichtung der zugeordneten Bremsscheibe verlaufende Schlitze oder Rillen, durch die eine gute Wärmeableitung der beim Bremsvorgang in dem Bremsbelag erzeugten Wärme erreicht werden soll.

Die DE 92 08 535 U1 ist auf innen belüftete Bremsklötze für Fahrzeugbremsen gerichtet. Der Reibbelag weist, in einer Draufsicht, eine rechteckige Form auf und ist durch mehrere geradlinige und parallel zueinander verlaufende Vertiefungen unterteilt. Die Vertiefungen sind in einer Breite ausgeführt, die etwa halb so breit wie das zwischen zwei Vertiefungen verbleibende Material ist. Außerdem sind in der gezeigten Figur die Vertiefungen in Bezug auf die rechteckige Außenkontur der Reibfläche schräg ausgerichtet, so dass das Reibmaterial im unteren Bereich und das Reibmaterial im oberen Bereich in einer Draufsicht auf die Reibfläche die Form eines Keils aufweist.

### Aufgabe

Der Erfindung liegt die Aufgabe zugrunde, einen Bremsklotz der eingangs genannten Art anzugeben, bei dem der Verschleiß und die Gefahr von Rissen in der Bremsscheibe deutlich minimiert sind und der eine verbesserte Wärmeverteilung und Wärmeabfuhr erreicht.

### Erfindung und deren Vorteile

Gelöst wird diese Aufgabe durch einen Bremsbelag mit den Merkmalen des Anspruchs 1. Vorteilhafte Ausgestaltungen sind in den Unteransprüchen angegeben.

Erfindungsgemäß werden die Abstände benachbarter Vertiefungen so gewählt, dass sie sich von der radial innen liegenden Seite des Reibbelags zu der radial außen liegenden Seite des Reibbelags hin, bezogen auf eine damit in Eingriff stehende Bremsscheibe, vergrößern.

Es hat sich überraschenderweise gezeigt, dass sich insbesondere durch diese Maßnahme eine gleichmäßige Temperatureinleitung in den Reibbelag deutlich verbessert.

Da sich die Reibbeläge und Bremsscheiben in ihren Reibzentren jedoch am stärksten aufheizen und dadurch ausdehnen, hat es sich als vorteilhaft erwiesen, wenn sich der Abstand der Vertiefungen von der Bremsbelagunterseite zur Bremsbelagoberseite hin vergrößert. Durch diese Maßnahme wird die Reibbelagoberfläche in dem Bereich, in dem die größten Reibungskräfte auftreten, nochmals vergrößert, was wiederum zu einer deutlich besseren Wärmeableitung und somit Kühlung des Reibbelages und der Bremsscheibe führt. Die Wahrscheinlichkeit von Rissen der Bremsscheibe wird dadurch ebenso weiter minimiert wie der auftretende Reibbeiagverschleiß.

Durch die erfindungsgemäße Anordnung der Vertiefungen wird eine partielle Unterbrechung der Energie-/Temperatureinleitung bezogen auf ein Oberflächenelernent in die Bremsscheibe erreicht. Hierdurch wird eine gleichmäßige Temperatureinleitung erzielt. Durch diese gleichmäßige Temperatureinleitung in den Reibbelag treten auch innerhalb der Bremsscheibe nur sehr geringe Temperaturengradienten auf. Dadurch werden Temperaturspitzen in der Bremsscheibe, welche ansonsten zu Rissen in den Bremsscheiben führen können, vermieden. Durch die gleichmäßige Temperaturverteilung innerhalb des Reibbelages und der Bremsscheibe wird folglich auch der Reibbelagverschleiß deutlich minimiert, so dass sich Wartungs- und Austauschintervalle verlängern.

Neben den Abständen benachbarter Vertiefungen so, wie dies vorstehend angegeben ist, kann es von Vorteil sein, zusätzlich die Breite benachbarter Vertiefungen von der radial innen liegenden Seite des Reibbelags zu der radial außen liegenden Seite des Reibbelags hin, bezogen auf eine damit in Eingriff stehende Bremsscheibe, zu verkleinern.

Vorzugsweise werden die parallel zueinander verlaufenden Vertiefungen geradlinig verlaufend ausgebildet.

Bevorzugt werden mindestens vier Vertiefungen vorgesehen, die entsprechend den vorstehend angegebenen Maßgaben, insbesondere in Bezug auf ihren Abstand zueinander, über die Reibfläche verteilt angeordnet werden.

Die Vertiefungen können auch in Form von Kreissegmenten verlaufen, wenn dies die Gegebenheiten erfordern. Solche Vertiefungen sollten dann vorzugsweise auf konzentrischen Kreisen, deren Mittelpunkt die Drehachse einer damit in Eingriff stehenden Bremsscheibe ist, liegen.

Die Vertiefungen können, um eine symmetrische Anordnung des Bremsklotzes in Bezug auf eine damit in Eingriff stehende Bremsscheibe zu erreichen, zu einer radialen Linie ausgerichtet werden, die ihren Ursprung in der Achse der Bremsscheibe hat. Dadurch ergibt sich eine Ausrichtung der Vertiefungen zu der radialen Linie unter einem Winkel von 90°.

Falls die Vertiefungen kreissegmentförmig ausgeführt sind, werden derartige Vertiefungen mit ihrer Tangenten unter einem Winkel von 90° zu der radialen Linie, die ihren Ursprung in der Achse der Bremsscheibe hat, ausgerichtet, wodurch sich auch hierbei eine symmetrische Anordnung ergibt.

Es ist möglich, einen Reibbelag, der beispielsweise eine im Wesentlichen rechteckige Form besitzt, zu einer radialen Linie, die ihren Ursprung in der Achse einer mit dem Reibbelag in Eingriff stehenden Bremsscheibe hat, geneigt einzubauen. Aber auch in diesem Fall ist allerdings darauf zu achten, dass die Vertiefungen unter einem rechten Winkel zu dieser radialen Linie verlaufen.

Nach einem weiteren Gedanken der Erfindung hat es sich als vorteilhaft erwiesen, die Vertiefungen in verschiedenen Querschnitten bzw. Querschnittsformen auszubilden. Geeignete Querschnittsformen ergeben sich durch U-förmige und rechteckförmige Querschnitte.

Es sind zwar auch V-förmige oder ellipsensegmentförmige oder kreissegmentförmige Querschnitte der Vertiefungen denkbar. Allerdings sind solche Querschnittsformen dahingehend nachteilig, dass sich ihre Öffnungsweite an der Reiboberfläche mit einer Abnutzung des Reibbelags ändert. Durch die im Wesentlichen über die Nutzungszeit des Reibbelags gleich bleibenden rechteckigen Querschnittsformen der Vertiefungen wird eine annähernd gleich bleibende Reibbelagkühlung erhalten.

Es ist aber vorgesehen, dass die einzelnen Vertiefungen eines Bremsklotzes unterschiedliche Querschnitte aufweisen, um auch hierdurch den Temperaturgradienten über dem Reibbelag möglichst konstant zu halten. Wesentlich hierbei ist aber auch, dass sich die Abstände benachbarte Vertiefungen zur radial außen liegenden Seite des Reibbelags hin vergrößern.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

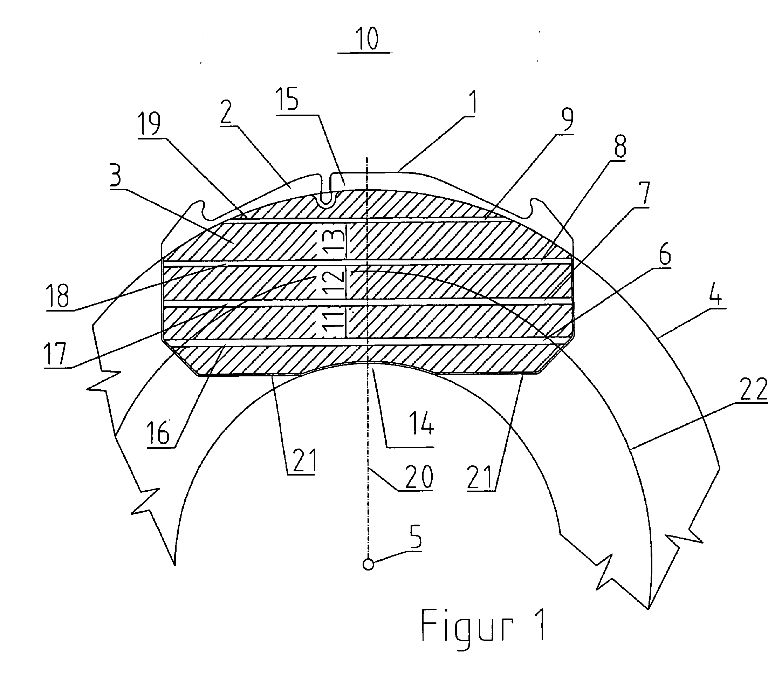

Die einzige Figur der Zeichnung, mit Figur 1 bezeichnet, zeigt einen erfindungsgemäßen Bremsklotz, der allgemein mit dem Bezugszeichen 1 bezeichnet ist, in einer Draufsicht, der einen Bremsbelagträger 2 und einen darauf angeordneten Reibbelag 3 umfasst.

Um eine Einbauposition des Bremsklotzes 1 in Bezug auf eine Bremsscheibe zu verdeutlichen, ist eine solche Bremsscheibe 4 angedeutet dargestellt, wobei deren Drehachse mit dem Bezugszeichen 5 bezeichnet ist.

In dem gezeigten Ausführungsbeispiel weist der Reibbelag 3 vier Vertiefungen 6, 7, 8 und 9 auf, die in Längserstreckung des Reibbelags 3, die mit dem Doppelpfeil 10 bezeichnet ist, im Wesentlichen geradlinig und parallel zueinander sowie tangential zu konzentrischen Kreisen, mit der Drehachse 5 als Kreismittelpunkt, verlaufen.

Die Vertiefungen 6, 7, 8 und 9 sind derart voneinander beabstandet, dass sich der jeweilige Abstand zwischen den Vertiefungen 6, 7, 8 und 9, mit den Bezugszeichen 11, 12, 13 bezeichnet, von der radial innen liegenden Seite 14 zu der radial außen liegenden Seite 15 hin vergrößert. Als ungefähre Regel kann angegeben werden, dass sich der jeweilige nächste Abstand um etwa 10 % gegenüber dem vorherigen Abstand vergrößert.

Darüber hinaus ist anhand der Figur 1 zu erkennen, dass sich die jeweiligen Breiten 16, 17, 18, und 19 der vier Vertiefungen 6, 7, 8 und 9 von der radial innen liegenden Seite 14 des Belags zu dessen radial außen liegender Seite 15 hin verkleinert. Als Regel für die nach außen hin abnehmende Breite der Vertiefungen kann angegeben werden, dass sich die Breite der jeweils benachbarten Vertiefung um etwa 10 bis 15 % verringert.

Der Bremsklotz 1 und damit der Reibbelag 3 sind symmetrisch zu der Bremsscheibe 4, in die der Reibbelag eingreift, ausgerichtet, und zwar zu einer radialen Linie, durch die strichpunktierte Linie 20 angedeutet, die ihren Ursprung in der Drehachse 5 der Bremsscheibe 4 besitzt. Zu dieser Linie 20 verlaufen die jeweiligen Vertiefungen 6, 7, 8 und 9 unter einem rechten Winkel (einem Winkel von 90°). Falls es die Einbaugegebenheiten erfordern, könnten die jeweiligen Vertiefungen 6, 7, 8 und 9 auch unter einem geringfügig von 90° abweichenden Winkel verlaufen.

Der Vorteil der gezeigten Anordnung der Vertiefungen ist darin zu sehen, dass während des Bremsvorganges die Wärmebelastung des Reibbelags 3 im Bereich der radial innen liegenden Seite 14 deutlich höher als im Bereich der radial außen liegenden Seite 15 ist. Durch die Positionierung der Vertiefungen in Bezug auf deren Abstand zueinander, aber auch aufgrund der unterschiedlichen Breiten, ist der prozentuale Anteil der verbleibenden Reibfläche auf der radial innen liegenden Seite 14 geringer als auf der radial außen liegenden Seite des Reibbelags 3. Umgekehrt ist die im Bereich der Reibfläche des Reibbelags 3 durch die Vertiefungen 6, 7, 8 und 9 aufgespannte Fläche auf der radial innen liegenden Seite 14 größer als auf der radial außen liegenden Seite 15.

Als eine zusätzliche Ausführungsvariante kann der Bremsklotz 1 und damit der Bremsbelagträger 2 um einen kleinen Winkel X zu der Linie 20 bzw. zu einer im rechten Winkel dazu verlaufenden Achse gedreht werden. In diesem Fall sollte aber die Orientierung der Vertiefungen 6, 7, 8 und 9 so beibehalten werden, wie dies in der Figur 1 dargestellt ist, d. h. sie sollten unter einem Winkel von 90° zu der Linie 20 verlaufen. Die Vertiefungen 6, 7, 8 und 9 würden dann dennoch, obwohl der Bremsklotz 1 und damit der Reibbelag 3 nicht mehr symmetrisch zu der Linie 20 ausgerichtet sind, unter einem Winkel von 90° zu der Linie 20 verlaufen. Mit anderen Worten wären die Vertiefungen 6, 7, 8 und 9 nach wie vor zu Tangenten bezogen auf Bewegungskreisen der Bremsscheibe 4, wie derjenige, der mit dem Bezugszeichen 22 bezeichnet ist, in Schnittpunkten zwischen der Linie 20 und einem solchen Kreis 22, unter einem rechten Winkel von 90° ausgerichtet.

Aufgrund der dargestellten Maßnahmen ist die Reibbelagoberfläche somit dort, wo höhere Temperaturbelastungen auftreten, deutlich vergrößert gegenüber Bereichen, in denen die Temperaturbelastungen niedriger sind. Durch die Vertiefungen 6, 7, 8 und 9 wird die Reibbelagoberfläche definiert in den erforderlichen Bereichen vergrößert, so dass sich eine deutlich verbesserte Reibbelagkühlung gegenüber herkömmlichen Reibbelägen ergibt.

Auch wird ein gleichmäßiger Energieeintrag beim Bremsvorgang erzielt, es ergibt sich ein geringerer Reibbelagverschleiß, und die Spannungen sowohl in dem Bremsklotz 1 als auch in der Bremsscheibe 4 werden gering gehalten, so dass auch wobei die Wahrscheinlichkeit von Rissen in der Bremsscheibe minimiert ist.

### Bezugszeichenliste

- 1: Bremsklotz
- 2: Bremsbelagträger
- 3: Reibbelag
- 4: Bremsscheibe
- 5: Drehachse
- 6,7,8,9: Vertiefungen
- 10: Doppelpfeil
- 11: Abstand von 6-7
- 12: Abstand von 7-8
- 13: Abstand von 8-9
- 14: radial innen liegende Seite
- 15: radial außen liegende Seite
- 16: Breite von 6
- 17: Breite von 7
- 18: Breite von 8
- 19: Breite von 9
- 20: strichpunktierte Linie
- 21: radial innen liegende Kante
- 22: Bewegungskreis

## Patentansprüche

1. Bremsklotz (1) für Scheibenbremsen mit einem Bremsbelagträger (2) und darauf angeordnetem Reibbelag (3), der wenigstens drei Vertiefungen (6, 7, 8, 9) aufweist, die im Wesentlichen in Längserstreckung des Reibbelags (3) und parallel zueinander verlaufen, **dadurch gekennzeichnet, dass** sich die Abstände (11, 12, 13) benachbarter Vertiefungen (6, 7, 8, 9) von der radial innen liegenden Seite (14) des Reibbelags zu der radial außen liegenden Seite (15) des Reibbelags (3) hin, bezogen auf eine damit in Eingriff stehende Bremsscheibe (4), vergrößert.

2. Bremsklotz nach Anspruch 1, **dadurch gekennzeichnet, dass** sich die Breite (16, 17, 18, 19) benachbarter Vertiefungen (6, 7, 8, 9) von der radial innen liegenden Seite (14) des Reibbelags (3) zu der radial außen liegenden Seite (15) des Reibbelags (3) hin, bezogen auf eine damit in Eingriff stehende Bremsscheibe (4), verkleinert.

3. Bremsklotz nach Anspruch 1 oder 2, **dadurch gekennzeichnet, dass** mindestens drei Vertiefungen (6, 7, 8, 9) vorgesehen sind.

4. Bremsklotz nach einem der Ansprüche 1 bis 3, **dadurch gekennzeichnet, dass** die Vertiefungen (6, 7, 8, 9) geradlinig verlaufen.

5. Bremsklotz nach einem der Ansprüche 1 bis 3, **dadurch gekennzeichnet, dass** die Vertiefungen (6, 7, 8, 9) in Form von Kreissegmenten verlaufen.

6. Bremsklotz nach Anspruch 5, **dadurch gekennzeichnet, dass** die Vertiefungen (6, 7, 8, 9) auf konzentrischen Kreisen, deren Mittelpunkt die Drehachse (5) einer damit in Eingriff stehenden Bremsscheibe (4) ist, liegen.

7. Bremsklotz nach einem der Ansprüche 1 bis 6, **dadurch gekennzeichnet, dass** die Vertiefungen (6, 7, 8, 9) symmetrisch zu einer radialen Linie (20) ausgerichtet sind, die ihren Ursprung in der Achse (5) einer mit dem Reibbelag (3) in Eingriff stehenden Bremsscheibe (4) hat.

8. Bremsklotz nach Anspruch 4, **dadurch gekennzeichnet, dass** die Vertiefungen (6, 7, 8, 9) unter einem 90°-Winkel zu einer radialen Linie (20) verlaufen, die ihren Ursprung in der Achse (5) einer mit dem Reibbelag (3) in Eingriff stehenden Bremsscheibe (4) hat.

9. Bremsklotz nach Anspruch 6, **dadurch gekennzeichnet, dass** die Tangenten der kreissegmentförmigen Vertiefungen (6, 7, 8, 9) unter einem 90°-Winkel zu einer radialen Linie (20) verlaufen, die ihren Ursprung in der Achse (5) einer mit dem Reibbelag (3) in Eingriff stehenden Bremsscheibe (4) hat.

10. Bremsklotz nach Anspruch 8 oder 9, **dadurch gekennzeichnet, dass** der Reibbelag (3) eine im Wesentlichen rechteckige Form besitzt und zu der radialen Linie (20), die ihren Ursprung in der Achse (5) einer mit dem Reibbelag (3) in Eingriff stehenden Bremsscheibe (4) hat, geneigt ist, allerdings unter Beibehaltung der Ausrichtung der Vertiefungen (6, 7, 8, 9) unter einem rechten Winkel zu dieser radialen Linie (20).

11. Bremsklotz nach einem der Ansprüche 1 bis 10, **dadurch gekennzeichnet, dass** die Vertiefungen (6, 7, 8, 9) einen im Wesentlichen rechteckigen Querschnitt aufweisen.

## Claims

1. Brake pad (1) for disc brakes with a brake lining carrier (2) and friction lining (3), which is arranged thereon and which has at least three recesses (6, 7, 8, 9) extending substantially in longitudinal direction of the friction lining (3) and parallel to one another, **characterised in that** the spacings (11, 12, 13) of adjacent recesses (6, 7, 8, 9) increase from the radially inwardly disposed side (14) of the friction lining towards the radially outwardly disposed side (15) of the friction lining (3) referred to a brake disc (4) disposed in engagement therewith.

2. Brake pad according to claim 1, **characterised in that** the width (16, 17, 18, 19) of adjacent recesses (6, 7, 8, 9) reduces from the radially inwardly disposed side (14) of the brake lining (3) towards the radially outwardly disposed side (15) of the brake lining (3) referred to a brake disc (4) disposed in engagement therewith.

3. Brake pad according to claim 1 or 2, **characterised in that** at least three recesses (6, 7, 8, 9) are provided.

4. Brake pad according to any one of claims 1 to 3, **characterised in that** the recesses (6, 7, 8, 9) run rectilinearly.

5. Brake pad according to any one of claims 1 to 3, **characterised in that** the recesses (6, 7, 8, 9) run in the form of circular segments.

6. Brake pad according to claim 5, **characterised in that** the recesses (6, 7, 8, 9) lie on concentric circles, the centre point of which is the axis (5) of rotation of a brake disc (4) disposed in engagement therewith.

7. Brake pad according to any one of claims 1 to 6, **characterised in that** the recesses (6, 7, 8, 9) are oriented symmetrically with respect to a radial line (20) having its origin in the axis (5) of a brake disc (4) disposed in engagement with the friction lining (3).

8. Brake pad according to 4, **characterised in that** the recesses (6, 7, 8, 9) run over a 90° angle with respect to a radial line (20) having its origin in the axis (5) of a brake disc (4) disposed in engagement with the friction lining (3).

9. Brake pad according to 6, **characterised in that** the tangents of the circularly segmental recesses (6, 7, 8, 9) run over a 90° angle with respect to a radial line (20) having its origin in the axis (5) of a brake disc (4) disposed in engagement with the friction lining (3).

10. Brake pad according to claim 8 or 9, **characterised in that** the friction lining (3) has a substantially rectangular shape and is inclined with respect to the radial line (20) having its origin in the axis (5) of a brake disc (4) disposed in engagement with the friction lining (3), but with maintenance of the alignment of the recesses (6, 7, 8, 9) at a right angle to this radial line (20).

11. Brake pad according to any one of claims 1 to 10, **characterised in that** the recesses (6, 7, 8, 9) have a substantially rectangular cross-section.

## Revendications

1. Plaquette de frein (1) pour freins à disque, comprenant un support de garniture de frein (2) et une garniture de friction (3) disposée dessus, qui présente au moins trois renfoncements (6, 7, 8, 9) qui s'étendent essentiellement dans l'étendue longitudinale de la garniture de friction (3) et parallèlement les uns aux autres, **caractérisée en ce que** les espacements (11, 12, 13) entre des renfoncements adjacents (6, 7, 8, 9) augmentent depuis le côté situé radialement à l'intérieur (14) de la garniture de friction jusqu'au côté situé radialement à l'extérieur (15) de la garniture de friction (3), par rapport à un disque de frein (4) en prise avec celle-ci.

2. Plaquette de frein selon la revendication 1, **caractérisée en ce que** la largeur (16, 17, 18, 19) des renfoncements adjacents (6, 7, 8, 9) diminue depuis le côté situé radialement à l'intérieur (14) de la garniture de friction (3) jusqu'au côté situé radialement à l'extérieur (15) de la garniture de friction (3), par rapport à un disque de frein (4) en prise avec celle-ci.

3. Plaquette de frein selon la revendication 1 ou 2, **caractérisée en ce qu'**au moins trois renfoncements (6, 7, 8, 9) sont prévus.

4. Plaquette de frein selon l'une quelconque des revendications 1 à 3, **caractérisée en ce que** les renfoncements (6, 7, 8, 9) s'étendent en ligne droite.

5. Plaquette de frein selon l'une quelconque des revendications 1 à 3, **caractérisée en ce que** les renfoncements (6, 7, 8, 9) s'étendent en forme de segments de cercle.

6. Plaquette de frein selon la revendication 5, **caractérisée en ce que** les renfoncements (6, 7, 8, 9) se situent sur des cercles concentriques dont le centre est l'axe de rotation (5) d'un disque de frein (4) en prise avec celle-ci.

7. Plaquette de frein selon l'une quelconque des revendications 1 à 6, **caractérisée en ce que** les renfoncements (6, 7, 8, 9) sont orientés symétriquement par rapport à une droite radiale (20), qui part de l'axe (5) d'un disque de frein (4) en prise avec la garniture de friction (3).

8. Plaquette de frein selon la revendication 4, **caractérisée en ce que** les renfoncements (6, 7, 8, 9) s'étendent suivant un angle de 90° par rapport à une droite radiale (20) qui part de l'axe (5) d'un disque de frein (4) en prise avec la garniture de friction (3).

9. Plaquette de frein selon la revendication 6, **caractérisée en ce que** les tangentes aux renfoncements (6, 7, 8, 9) en forme de segments de cercle s'étendent suivant un angle de 90° par rapport à une droite radiale (20), qui part de l'axe (5) d'un disque de frein (4) en prise avec la garniture de friction (3).

10. Plaquette de frein selon la revendication 8 ou 9, **caractérisée en ce que** la garniture de friction (3) possède une forme essentiellement rectangulaire et est inclinée par rapport à la droite radiale (20), qui part de l'axe (5) d'un disque de frein (4) en prise avec la garniture de friction (3), mais en conservant toutefois l'orientation des renfoncements (6, 7, 8, 9) à angle droit par rapport à cette droite radiale (20).

11. Plaquette de frein selon l'une quelconque des revendications 1 à 10, **caractérisée en ce que** les renfoncements (6, 7, 8, 9) présentent une section transversale essentiellement rectangulaire.
